(19) **Europäisches Patentamt / European Patent Office / Office européen des brevets**

(11) **EP 4 660 478 A1**

(12) **DEMANDE DE BREVET EUROPEEN**

(43) Date de publication:
**10.12.2025 Bulletin 2025/50**

(21) Numéro de dépôt: **24193661.6**

(22) Date de dépôt: **08.08.2024**

(51) Classification Internationale des Brevets (IPC):
**F16F 15/26** *(2006.01)* **F16F 15/28** *(2006.01)*

(52) Classification Coopérative des Brevets (CPC):
**F16F 15/28; B23Q 11/0032; F16F 15/264**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **03.06.2024 EP 24179660**

(71) Demandeur: **Precitrame Machines SA**
**2720 Tramelan (CH)**

(72) Inventeurs:
• **Haag, David**
**2536 PLAGNE (CH)**
• **Goujon, Pierre**
**2000 Neuchâtel (CH)**

(54) **DISPOSITIF DE COMPENSATION DE LA GRAVITE**

(57) L'invention concerne un dispositif de compensation de la gravité pour une machine-outil ou une machine de mesure, destiné à compenser le balourd d'un élément rotatif (1) pivoté sur un support (4). Le dispositif comporte un mobile de compensation (2) monté pivotant sur le support (4) et relié cinématiquement à l'élément rotatif (1). De façon originale, le dispositif comporte un élément de rappel élastique (3) dont une première extrémité est montée directement sur le mobile de compensation (2), de façon excentrée, pour exercer sur le mobile de compensation une force dont l'intensité et le bras de levier varient en fonction de la position angulaire de l'élément rotatif, les caractéristiques du dispositif étant choisies pour que le couple résultant sur l'élément rotatif compense, sur une plage angulaire fonctionnelle, le couple dû au balourd.

[Fig. 1]

## Description

### Domaine technique

La présente invention se rapporte à un dispositif de compensation de la gravité pour une machine-outil ou une machine de mesure. Elle concerne, plus particulièrement, un dispositif de compensation du balourd d'un élément rotatif d'une telle machine. L'invention porte également sur une machine-outil ou une machine de mesure comportant un tel dispositif.

### Etat de la technique

On connait de nombreux dispositifs destinés à compenser les effets de la gravité sur un mobile non équilibré sur son axe de rotation.

La demande US4768762 décrit un dispositif de compensation du poids d'un mobile en rotation à l'aide d'un ressort fixé à une bande s'enroulant autour d'une came solidaire du mobile. Le couple exercé par le poids du mobile varie selon une fonction sinusoïdale de l'angle formée entre la verticale et la droite passant par l'axe de rotation du mobile et son centre de gravité. La force de rappel du ressort varie en fonction de son élongation. Le profil de came est conçu de telle sorte que le couple de rappel exercé par le ressort compense le poids du mobile en fonction de l'angle du mobile et de l'élongation du ressort.

Le document US4500251 dévoile un robot comportant un dispositif de compensation du poids d'un segment terminal pivoté autour d'un segment intermédiaire lui-même pivoté sur un bâti. Une première roue pivotée sur le bâti, sur le même axe de rotation que le segment intermédiaire, est reliée, par une chaine ou une courroie crantée, à une deuxième roue de même diamètre, solidaire et coaxiale avec le segment terminal, de telle sorte que, les deux roues ayant toujours la même orientation, la position angulaire de la première roue par rapport au bâti corresponde à la position angulaire du segment final par rapport au bâti, indépendamment de la position angulaire du segment intermédiaire. Un ressort est fixé entre le bâti et la première roue pour exercer un couple de rappel compensant le balourd du segment terminal. Quand le segment terminal est en position verticale, la force de rappel du ressort passe par l'axe de la première roue et le couple de rappel est nul. A l'inverse, le bras de levier et le couple de rappel sont maximaux quand le segment terminal est en position horizontale. Pour que les variations de l'orientation et de l'intensité de la force de rappel restent faibles et que le couple de rappel se rapproche de la fonction purement sinusoïdale du balourd, il est important que les variations de la tension et de l'orientation du ressort restent faibles. Pour cela, son point d'accroche sur le bâti doit être aussi éloigné que possible. L'utilisation de deux roues reliées de même diamètre permet de transmettre l'information de l'orientation du segment terminal ainsi que le couple de compensation. Il ne serait pas possible de fixer le ressort directement sur le segment intermédiaire dont l'orientation varie. Le robot pourrait comporter un nombre quelconque de segments en utilisant une série de renvois identiques pour transmettre jusqu'au bâti, l'information de l'orientation du segment terminal.

Dans ces deux premiers mécanismes de compensation, la longueur importante du ressort de rappel ne permet pas d'envisager l'intégration de ces systèmes dans l'espace limité de machines-outils en particulier si le support sur lequel il est monté est lui-même mobile. De plus, l'action d'une force directement sur l'élément rotatif comportant un balourd à compenser, induit une force à composante radiale sur l'axe de rotation qui nuit à la précision du positionnement de l'élément rotatif et provoque une usure prématurée du pivot.

Le document US20100294173 dévoile un mécanisme de compensation de la gravité pour une table oscillante de machine-outil. Deux pignons de même taille engrènent pour tourner en sens contraire à la même vitesse. Les deux pignons sont pivotés sur un bâti, l'un étant solidaire de la table oscillante. Une force constante en compression ou en traction est appliquée entre deux goupilles fixées sur chaque pignon, à l'aide de divers dispositifs : un vérin hydraulique, un piston pneumatique, un ressort dont une extrémité est montée sur un enrouleur afin que sa longueur ne varie pas, un système de poids et poulie.

Le document JP2000301405 décrit un autre mécanisme de compensation de la gravité d'une table basculante de machine-outil. L'extrémité d'un vérin agit sur une manivelle reliée cinématiquement à la table pour compenser le balourd de la table. Pour des raisons d'encombrement au voisinage de l'axe de rotation de la table, la manivelle n'est pas directement solidaire de la table, mais est montée sur un mobile déporté, relié à la table par une courroie de transmission ou un engrenage présentant un rapport d'entrainement de un pour un.

Ces mécanismes présentent divers inconvénients en matière d'encombrement, de complexité, de fiabilité, et d'inertie, en particulier dans le cas où le support sur lequel est monté l'élément rotatif est lui-même mobile et quand ce dernier est destiné à subir des accélérations angulaires importantes.

D'une façon générale, le balourd d'un élément rotatif sur une machine dépourvue de dispositif de compensation, doit être supporté par le moteur actionnant la rotation de cet élément. Cela entraine une usure prématurée du moteur, une consommation accrue d'électricité, un échauffement du moteur et des déformations thermiques préjudiciables à la précision de la machine et demandant des moyens de refroidissement supplémentaires. L'asservissement et la régulation du moteur sont également plus délicats à réaliser en présence d'un balourd. Enfin, le travail dans une position fixe défavorable proche de 90° nécessite de prévoir un frein pour bloquer la rotation de l'élément rotatif. Ajouter un contrepoids pour équilibrer l'élément rotatif n'est pas souhaitable, car cela augmenterait son inertie et impacterait la vitesse et la précision d'usinage ou de mesure.

L'objectif de l'invention est de remédier aux différents inconvénients de l'art antérieur et de fournir un système de compensation de la gravité qui est à la fois précis sur au moins une plage angulaire fonctionnelle, simple, fiable, compact et de faible inertie.

**Divulgation de l'invention**

Le but de l'invention est atteint par un dispositif de compensation de la gravité pour une machine-outil ou une machine de mesure, destiné à compenser le balourd d'un élément rotatif pivoté sur un support et comportant un mobile de compensation monté pivotant sur le support et relié cinématiquement à l'élément rotatif. Selon un aspect original, le dispositif comporte un élément de rappel élastique dont une première extrémité élastique est montée sur le mobile de compensation de façon excentrée. Avec cet agencement, il est possible de choisir les caractéristiques du dispositif de telle sorte que le couple résultant sur l'élément rotatif, compense, sur une plage angulaire fonctionnelle, le couple dû au balourd.

Ce dispositif permet de reproduire un couple de compensation quasi sinusoïdal sans appliquer d'effort radial sur l'élément rotatif, tout en restant particulièrement simple, fiable, compact et de faible inertie. Selon un aspect avantageux, à la position d'équilibre stable de l'élément rotatif où le couple dû au balourd est nul, correspond une position d'équilibre instable pour le dispositif de compensation.

Selon un aspect avantageux, la position où le couple dû au balourd est nul correspond à une position de tension maximale de l'élément de rappel élastique.

Selon un aspect avantageux, une deuxième extrémité de l'élément de rappel élastique est montée sur le support.

Selon un autre aspect avantageux, la deuxième extrémité de l'élément de rappel élastique est montée sur un second mobile de compensation monté pivotant sur le support et relié cinématiquement à l'élément rotatif.

Selon un aspect particulièrement avantageux de l'invention, le mobile de compensation est relié cinématiquement à l'élément rotatif avec un rapport d'entrainement inférieur à un de telle sorte qu'un déplacement angulaire donné de l'élément rotatif génère un déplacement angulaire plus faible du mobile de compensation.

Selon un aspect avantageux, le dispositif de compensation comporte deux mobiles de compensations pivotant dans le même sens.

Selon un autre aspect avantageux, le dispositif de compensation comporte deux mobiles de compensations pivotant en sens contraires.

**Brève description des dessins**

D'autres détails de l'invention apparaîtront plus clairement à la lecture de la description qui suit, faite en référence aux dessins annexés dans lesquels :

- La figure 1 représente un schéma cinématique d'un mécanisme de compensation selon l'invention,
- La figure 2 représente un schéma de principe d'une première variante du dispositif de compensation selon l'invention,
- La figure 3 représente un schéma de principe d'une deuxième variante d'un dispositif de compensation selon l'invention,
- Les figures 4 à 6 représentent respectivement les valeurs du bras de levier, de la tension et du couple de compensation en fonction de l'angle de l'élément rotatif pour une configuration donnée de la première variante,
- Les figures 7 à 9 présentent différentes courbes de couple de compensation obtenues avec différents rapports d'entrainement pour un dispositif de compensation selon la première ou la deuxième variante,
- La figure 10 représente un schéma de principe d'une troisième variante du dispositif de compensation selon l'invention,
- Les figures 11 à 13 présentent différentes courbes de couple de compensation obtenues avec différents rapports d'entrainement pour un dispositif de compensation selon la troisième variante.

**Modes de réalisation de l'invention**

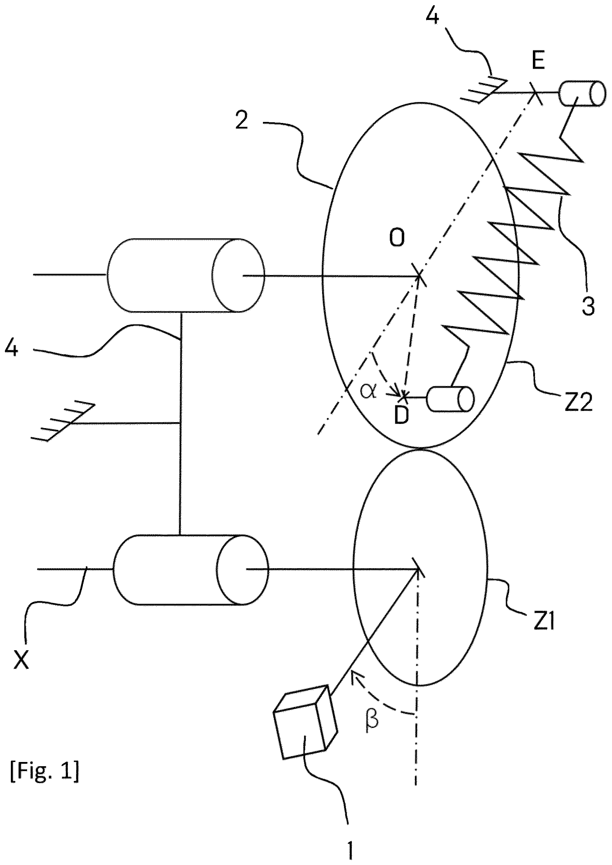

La figure 1 présente le schéma cinématique d'un dispositif de compensation de la gravité selon un premier mode de réalisation de l'invention. Le dispositif de compensation est monté sur un support 4 d'une machine-outil ou d'une machine de mesure. Un élément rotatif 1 est monté pivotant autour d'un axe X du support 4. L'élément rotatif 1, n'est pas équilibré sur son axe de rotation et présente un balourd que le dispositif de compensation vise à compenser. Le dispositif de compensation est prévu pour compenser le balourd de l'élément rotatif pour des rotations n'excédant pas +/- 180° autour de la position d'équilibre de l'élément rotatif, c'est-à-dire lorsque son centre de gravité G est à la verticale, sous l'axe de rotation X. En pratique, l'amplitude angulaire de l'élément rotatif est de préférence limitée par des butées et est inférieure à 360°. Le dispositif est adapté pour fournir un couple de compensation sur une plage angulaire fonctionnelle englobant l'amplitude angulaire de l'élément rotatif.

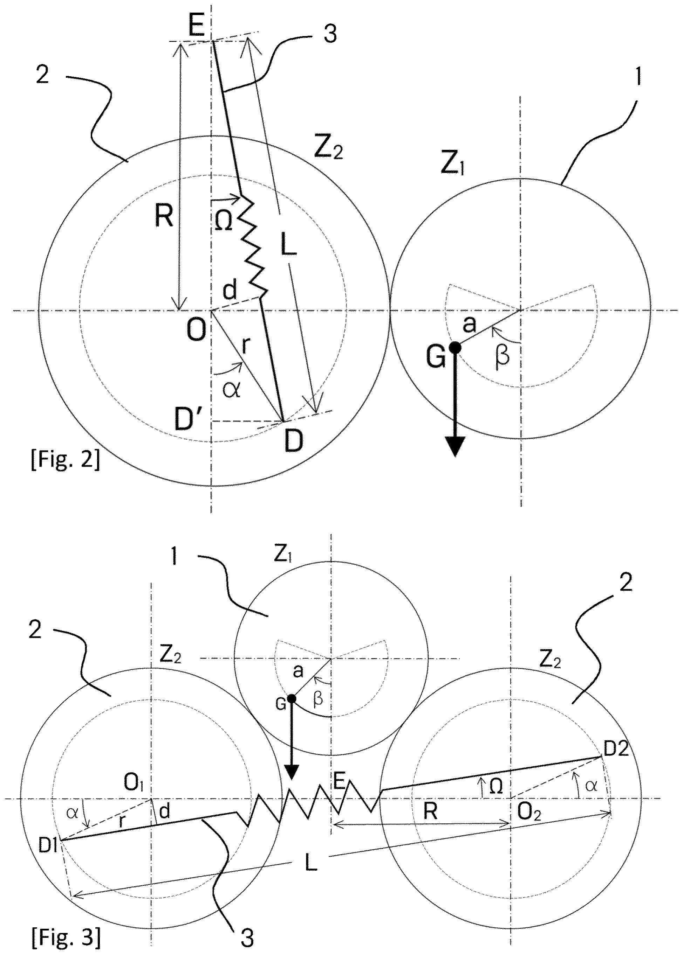

L'élément rotatif 1 présente une masse dont le centre de gravité G est situé à une distance a de l'axe de rotation X tel que représenté sur le schéma de la figure 2. Le couple dû au balourd de l'élément rotatif 1 est une fonction sinusoïdale de l'angle β entre la verticale et le plan contenant l'axe de rotation X et le centre de gravité G. Si m est la masse de l'élément rotatif 1 et g la gravité, le couple Cb dû au balourd est égal à :

$$Cb = m \cdot g \cdot a \cdot \sin \beta$$

Le couple dû au balourd Cb est nul quand le centre de gravité est à la verticale de l'axe X et maximal quand il est à l'horizontale en référence aux figures 2, 3, et 10. Le dispositif de compensation selon l'invention vise à délivrer un couple de compensation Cc, opposé au couple Cb, afin de supprimer les inconvénients du balourd sans augmenter significativement l'inertie.

Le dispositif de compensation comporte un mobile de compensation 2 monté pivotant sur le support 4 et relié cinématiquement à l'élément rotatif 1. Dans le mode de réalisation présenté, le mobile de compensation 2 est muni d'une denture Z2 engrenant avec une denture Z1 de l'élément rotatif 1, mais d'autres moyens de liaison conviendraient, comme une chaine ou une courroie crantée. Une première extrémité d'un l'élément de rappel élastique 3 est montée sur le mobile de compensation, de manière excentrée. De façon courante, l'élément de rappel élastique est constitué d'un ressort de traction dont une première extrémité est fixée sur le mobile de compensation 2, de préférence de manière pivotante. Dans une première variante représentée aux figures 1 et 2, une deuxième extrémité de l'élément de rappel élastique 3 est fixée au support 4, de préférence de manière pivotante. L'élément de rappel élastique exerce un effort de traction sur le point de fixation D du mobile de compensation 2 dans la direction du deuxième point de fixation E en générant un couple de rappel Cra sur le mobile de compensation qui transmet un couple de compensation Ce à l'élément rotatif 1 via l'engrenage des dentures Z1, Z2.

L'axe de rotation du mobile de compensation pourrait ne pas être parallèle à l'axe de rotation de l'élément rotatif, sans sortir du cadre de l'invention. Des questions d'encombrement pourraient par exemple amener à préférer des dentures coniques.

Lorsque l'élément rotatif 1 est dans une position d'équilibre stable, son centre de gravité est en position basse à la verticale de l'axe X, c'est-à-dire que l'angle β et le couple dû au balourd Cb sont nuls. Cette position correspond à une position d'équilibre instable pour le dispositif de compensation dans laquelle la tension de l'élément de rappel élastique est maximale et dans laquelle la direction de la force de rappel passe par l'axe de rotation du mobile de compensation 2. Ainsi le couple de rappel Cra et le couple de compensation Ce sont également nuls.

Le schéma de la figure 2 reprend les éléments géométriques du dispositif de compensation présentés sur la figure 1. La première extrémité de l'élément élastique de rappel 3 est fixée en D à une distance r du centre de rotation O du mobile de compensation 2. La deuxième extrémité est fixée en E sur le support 4, à une distance R du point O.

Le couple de rappel Cra qui s'exerce sur le mobile de compensation est le produit du bras de levier d par la tension T du ressort de traction, elle-même dépendante de la longueur L séparant les points de fixation E et D du ressort.

$$Cra = T \cdot d$$

Si $Z_1$ et $Z_2$ sont les nombres de dents respectifs des dentures Z1 et Z2, le rapport d'entrainement Re entre l'élément rotatif et le mobile de compensation est :

$$Re = \frac{Z1}{Z2}$$

L'angle de rotation α du mobile de compensation se déduit de l'angle d'inclinaison β de l'élément rotatif 1 :

$$\alpha = Re \cdot \beta$$

Dans le triangle EDD', on a la relation :

$$\text{Tan } \Omega = \frac{DD\prime}{ED\prime} = \frac{r \sin \alpha}{R + r \cos \alpha}$$

On en déduit la valeur de $\Omega$ en fonction de $\alpha$, donc de $\beta$ :

$$\Omega = \text{Artan} \left( \frac{r \sin \alpha}{R + r \cos \alpha} \right)$$

Ce qui permet de calculer le bras de levier d :

$$d = R \cos \Omega$$

La longueur L se déduit de $\Omega$ :

$$\cos \Omega = \frac{ED\prime}{L}$$

$$L = \frac{R + r \cos \alpha}{\cos \Omega}$$

La tension T du ressort dépend de sa raideur K, de son élongation, différence entre sa longueur L et sa longueur à vide Lo, et de sa tension à vide To :

$$T = (L - L0) K + To$$

Cela permet de calculer le couple de compensation Ce en fonction de l'angle $\beta$ :

$$Cc = \frac{Z2}{Z1} Cra$$

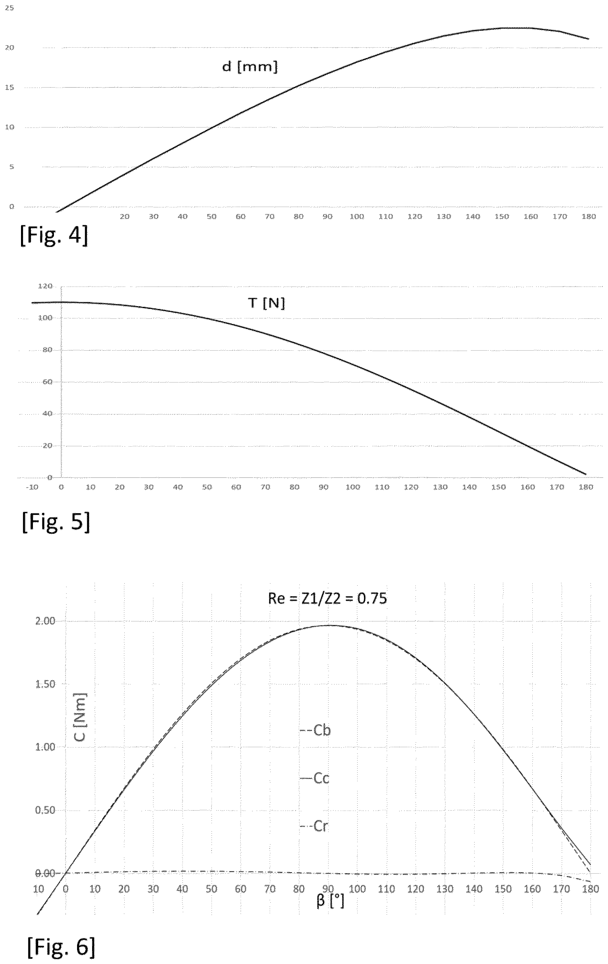

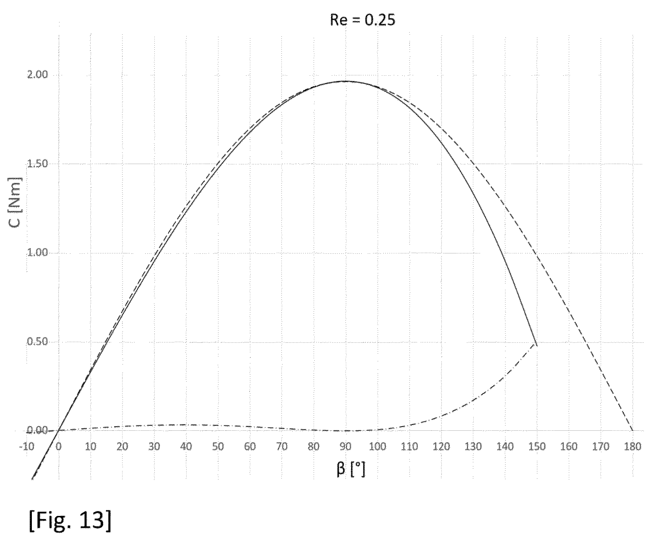

Sur l'ensemble des exemples présentés sur les figures 4 à 9 et 10 à 13, plusieurs dimensions du dispositif ont été fixées arbitrairement afin d'illustrer l'influence de certains paramètres sur le couple de compensation. Ainsi on a fixé pour l'élément rotatif 1 un balourd de 5kg avec une excentration a de 40mm et pour le dispositif de compensation, des distances R et r respectivement de 50mm et 22,5mm.

Dans un premier exemple illustré sur les figures 4 à 6, le rapport d'entrainement $Re = \frac{Z1}{Z2}$ a été fixé à $\frac{3}{4}$. On détermine ensuite les caractéristiques du ou des ressorts qui permettent de compenser au mieux le balourd de l'élément rotatif 1. Un ressort ayant une longueur à vide de 37mm, une raideur K de 6.16 N/mm et une tension à vide To de 1.2 N permet d'obtenir les valeurs présentées dans le tableau ci-après et illustrées par les représentations graphiques des figures 4 à 6. Les valeurs du bras de levier d, de la tension T, et du couple de compensation Ce sont exprimées en fonction des valeurs de l'angle $\beta$ variant de dix en dix de zéro à 180°. Dans l'ensemble des figures 6 à 9 et 11 à 13, le couple lié au balourd Cb, le couple de compensation Ce et le couple résiduel Cr sont représentés en fonction de l'angle $\beta$, respectivement en trait tillé, en trait continu et en trait mixte.

| Angle de rotation β de l'arbre | ° | 0 | 10 | 20 | 30 | 40 | 50 | 60 | 70 | 80 | 90 | 100 | 110 | 120 | 130 | 140 | 150 | 160 | 170 | 180 |
|---|---|---|---|---|---|---|---|---|---|---|---|---|---|---|---|---|---|---|---|---|
| Couple lié au balourd | Nm | 0.00 | 0.34 | 0.67 | 0.98 | 1.26 | 1.50 | 1.70 | 1.84 | 1.93 | 1.96 | 1.93 | 1.84 | 1.70 | 1.50 | 1.26 | 0.98 | 0.67 | 0.34 | 0.00 |
| Force de rappel | N | 114 | 113 | 112 | 110 | 107 | 103 | 98 | 93 | 87 | 80 | 73 | 65 | 56 | 47 | 38 | 28 | 19 | 9 | 0 |
| Bras de levier d | mm | 0 | 2 | 4 | 6 | 8 | 10 | 12 | 13 | 15 | 17 | 18 | 19 | 20 | 21 | 22 | 22 | 22 | 22 | 21 |
| Couple de compensation | Nm | 0.00 | 0.34 | 0.66 | 0.97 | 1.25 | 1.49 | 1.69 | 1.84 | 1.93 | 1.96 | 1.94 | 1.85 | 1.71 | 1.51 | 1.26 | 0.98 | 0.67 | 0.36 | 0.07 |
| Couple résiduel | Nm | 0.000 | 0.006 | 0.011 | 0.014 | 0.015 | 0.015 | 0.012 | 0.008 | 0.002 | -0.003 | -0.007 | -0.009 | -0.009 | -0.005 | 0.000 | 0.004 | 0.000 | -0.019 | -0.067 |

De façon surprenante, il est possible de reproduire un couple de compensation pseudo sinusoïdal très proche du couple sinusoïdal dû au balourd tel que représenté sur la figure 6. Dans l'exemple présenté, sur une plage de +/-160°, la valeur maximale du couple résiduel représente seulement 0.7% du couple maximal sans compensation. Les figures représentent le couple de compensation pour des valeurs positives de $\alpha$, il est bien entendu que le dispositif se comporte de manière symétrique pour les valeurs de $\alpha$ négatives.

Les figures 4 et 5 représentent respectivement le bras de levier d et la tension T en fonction de l'angle $\beta$. La valeur d du bras de levier est nulle pour un angle $\beta$ nul, augmente jusqu'à la valeur de r où le segment [OD] est perpendiculaire au segment [DE], puis décroit. La valeur de la tension T est maximale pour un angle $\beta$ nul puis décroit constamment. Le produit d.T, proportionnel au couple de compensation, présente une valeur nulle pour un angle $\beta$ nul, passe par un maximum puis diminue quand la tension de l'élément élastique se relâche. Il est préférable que le couple de compensation soit le plus proche du couple lié au balourd quand celui-ci est le plus élevé, c'est-à-dire pour les valeurs de l'angle $\beta$ voisines de 90°. Il est donc important de centrer la pseudo sinusoïde de telle sorte que son maximum soit obtenu pour un angle $\beta$ de 90°. Les paramètres influant le plus la position de ce maximum sont la longueur à vide Lo du ressort, le rapport d'entrainement et la distance R définissant la position de la deuxième extrémité de l'élément de rappel élastique. La longueur à vide agit sur la décroissance de la tension T en fonction de l'angle $\beta$. Plus la longueur à vide est importante, plus la chute de tension du ressort intervient rapidement et plus le sommet de la pseudo sinusoïde se déplace vers les plus faibles valeurs de $\beta$. Le rapport d'entrainement définit la position du maximum du bras de levier en fonction de $\beta$. Plus le rapport d'entrainement est faible, plus le maximum du bras de levier se produit tardivement et plus le sommet de la pseudo sinusoïde se déplace vers les plus grandes valeurs de $\beta$. Une fois la pseudo sinusoïde centrée sur la valeur $\beta$ de 90°, l'ajustement de la tension à vide et de la raideur permet de se rapprocher de la courbe sinusoïdale du couple liée au balourd.

Les dispositifs de l'art antérieur visent à reproduire le couple sinusoïdal dû à la gravité en appliquant une force constante ou variant le moins possible sur un point d'action monté directement sur l'élément rotatif ou sur un mobile relié cinématiquement à l'élément rotatif avec un rapport d'entrainement de un pour un. D'une façon originale, le dispositif de la présente invention permet de simuler un couple sinusoïdal en exploitant les variations conjointes du bras de levier et de la tension en fonction de la position angulaire de l'élément rotatif.

Le dispositif de compensation de l'invention permet de compenser le balourd d'un élément rotatif ayant une amplitude angulaire limitée qui n'excède pas +/-180° autour de sa position d'équilibre. Si l'on fixe les caractéristiques géométriques du dispositif et l'amplitude angulaire de l'élément rotatif, le rapport d'entrainement permet de définir la longueur minimale atteinte par le ressort lorsque l'élément rotatif 1 est en butée. On en déduit la course utile de l'élément élastique ainsi que sa longueur à vide maximale qui doit, de préférence, être inférieure à cette longueur minimale afin que le ressort reste toujours en tension.

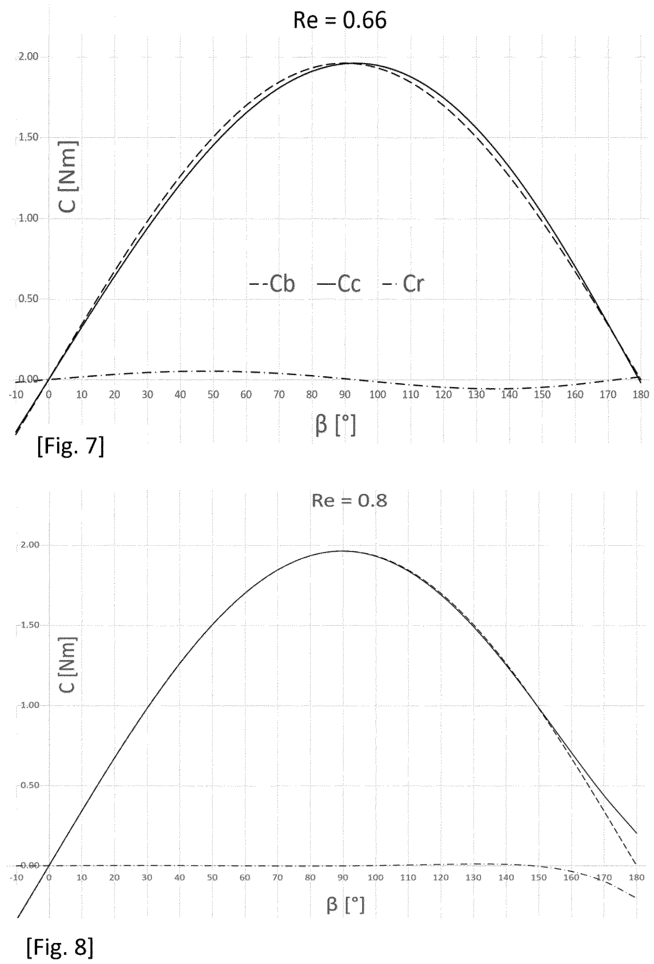

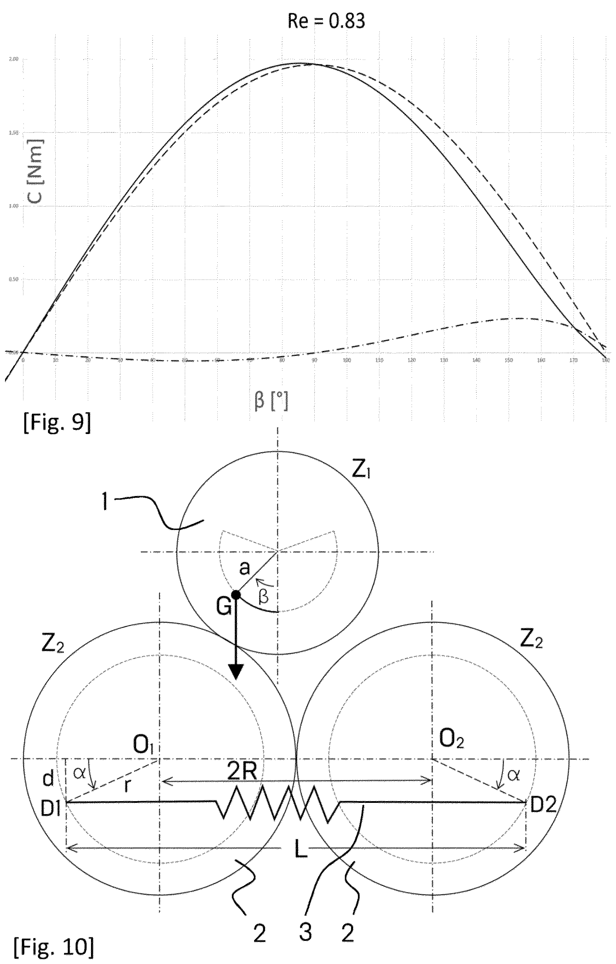

Les figures 7 à 9 illustrent les compensations obtenues pour des rapports d'entrainement respectivement de 2/3, 4/5 et 5/6 pour lesquelles les caractéristiques de l'élément de rappel élastiques, raideur, longueur à vide et tension à vide, ont été adaptées. On peut remarquer que le sommet de la courbe de compensation est obtenu pour une valeur de $\beta$ légèrement supérieur à 90° dans le cas de la figure 7 et légèrement inférieur dans celui de la figure 10.

Dans les exemples présentés correspondant à la première variante de l'invention, les valeurs du rapport d'entrainement Re comprises entre 0.7 et 0.8 permettent d'obtenir les meilleures courbes de compensation. Cependant, les valeurs de R et r ont été figées arbitrairement alors qu'il serait également possible de faire varier ces paramètres si bien qu'il n'est pas possible de caractériser l'invention d'une manière simple en fournissant des intervalles de valeurs pour chaque paramètre. D'une façon générale, dans les cas des deux premières variantes de l'invention, il est possible d'obtenir une compensation de la gravité sur au moins une partie de la plage angulaire +/- 180° pour des valeurs du rapport d'entrainement comprises entre 0,6 et 0,9.

La figure 3 illustre schématiquement une seconde variante qui comporte deux mobiles de compensation 2 portant des dentures Z2 engrenant avec la denture Z1 de l'élément rotatif 1. La deuxième extrémité de l'élément élastique 3 n'est pas fixée au support 4 comme dans la variante précédente, mais au deuxième mobile de compensation. Fixer un seul ressort entre les points D1 et D2 est équivalent à fixer deux ressorts au point central E et cette variante est cinématiquement équivalente à la précédente. La solution à un seul ressort permet de faire l'économie du deuxième axe de fixation sur le support 4 et d'augmenter la longueur utile du ressort qui aurait sinon été perdue par le moyen de fixation au support 4.

Le schéma de la figure 10 représente une troisième variante d'un dispositif de compensation selon l'invention comportant également deux mobiles de compensation 2 montés cette fois-ci en série, et non plus en parallèle, si bien que les deux mobiles tournent dans des directions opposées, le premier mobile de compensation jouant le rôle d'inverseur pour le second mobile. Il est bien entendu que les deux mobiles ne sont pas nécessairement en prise directe et qu'une roue inverseuse pourrait être montée entre l'élément rotatif 1 et le second mobile ou tout autre agencement permettant d'inverser le sens de rotation du deuxième mobile par rapport au premier mobile. Un élément élastique de rappel 3 est monté entre les deux mobiles de compensation 2, de telle sorte que les points de fixation D1, D2 sont alignés avec les centres O1, O2 des mobiles de compensation 2 lorsque l'angle $\beta$ est nul. Dans cette configuration, le segment [D1D2] est toujours parallèle à la ligne des centres [O1O2].

Le bras de levier d s'exprime simplement par :

$$d = r \sin \alpha$$

Si 2R est la distance entre les centres O1 et O2, la longueur L entre les points d'accroche D1 et D2 s'exprime :

$$L = 2 (R + r \cos \alpha)$$

Pour un même rapport d'entrainement, l'augmentation du bras de levier d et la réduction de la longueur L en fonction de l'angle $\beta$ sont plus rapides dans cette 3e variante que dans les deux précédentes. La valeur maximale r du bras de levier intervient pour un angle $\alpha$ égal à 90° dans cette troisième variante et supérieur à 90° dans les deux premières. Il en résulte que cette variante est adaptée pour des rapports d'entrainement Re plus faible qui vont limiter l'élongation de l'élément élastique de rappel 3 et optimiser sa résistance à la fatigue. En revanche, les valeurs plus faibles du rapport d'entrainement ne permettent pas de réaliser une compensation pour une grande plage angulaire. D'une façon générale, dans les cas de cette troisième variante de l'invention, il est possible d'obtenir une compensation de la gravité sur au moins une partie de la plage angulaire +/-180° pour des valeurs du rapport d'entrainement comprises entre 0,2 et 0,8.

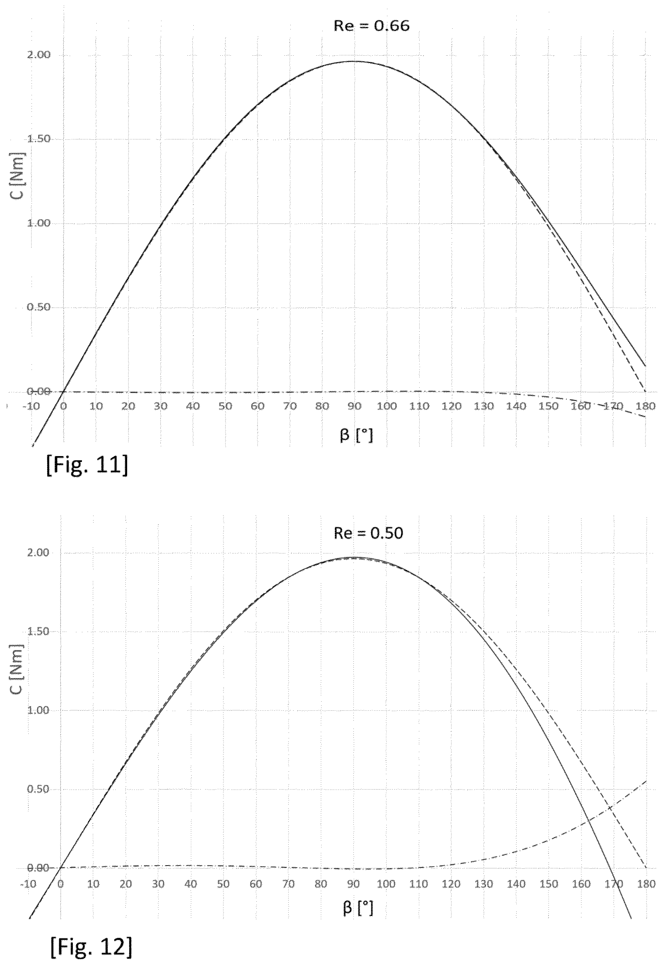

Les figures 11 à 13 illustrent des exemples de couples de compensation obtenues avec la troisième variante pour différents rapports d'entrainement en conservant les mêmes valeurs de R et r que dans les exemples précédents.
Dans les exemples présentés, les deux mobiles de compensation sont identiques, mais ils pourraient également présenter des rapports d'entrainement distincts et des excentrations r distinctes sans sortir du cadre de l'invention.

## Revendications

1. Dispositif de compensation de la gravité pour une machine-outil ou une machine de mesure, destiné à compenser le balourd d'un élément rotatif (1) pivoté sur un support (4), le dispositif comportant un mobile de compensation (2) monté pivotant sur le support (4) et relié cinématiquement à l'élément rotatif (1), **caractérisé en ce que** le dispositif comporte un élément de rappel élastique (3) dont une première extrémité est montée directement sur le mobile de compensation (2), de façon excentrée, pour exercer sur le mobile de compensation une force dont l'intensité et le bras de levier varient en fonction de la position angulaire de l'élément rotatif, les caractéristiques du dispositif étant choisies pour que le couple résultant sur l'élément rotatif compense, sur une plage angulaire fonctionnelle, le couple dû au balourd.

2. Dispositif selon la revendication 1 dans lequel la position d'équilibre stable de l'élément rotatif où le couple dû au balourd est nul correspond à une position d'équilibre instable du dispositif de compensation.

3. Dispositif selon l'une des revendications précédentes dans lequel la position d'équilibre stable de l'élément rotatif où le couple dû au balourd est nul correspond à une position de tension maximale de l'élément de rappel élastique.

4. Dispositif selon l'une des revendications précédentes dans lequel une deuxième extrémité de l'élément de rappel élastique (3) est montée sur le support (4).

5. Dispositif selon l'une des revendications 1 à 3 dans lequel une deuxième extrémité de l'élément de rappel élastique (3) est montée sur un second mobile de compensation monté pivotant sur le support (4) et relié cinématiquement au sous ensemble (1).

6. Dispositif selon la revendication précédente **caractérisé en ce qu'**il est agencé pour que les deux mobiles de compensations (2) pivotent dans le même sens.

7. Dispositif selon l'une des revendications précédentes dans lequel le rapport d'entrainement entre l'élément rotatif (1) et le mobile de compensation (2) est inférieur à un de telle sorte qu'un déplacement angulaire donné de l'élément rotatif génère un déplacement angulaire plus faible du mobile de compensation.

8. Dispositif selon l'une des revendications précédentes dans lequel le rapport d'entrainement entre l'élément rotatif (1) et le mobile de compensation (2) est compris entre 0,6 et 0,9.

9. Dispositif selon la revendication 5 **caractérisé en ce qu'**il est agencé pour que les deux mobiles de compensations (2) pivotent en sens contraires.

10. Dispositif selon la revendication précédente dans lequel le rapport d'entrainement entre l'élément rotatif (1) et le mobile de compensation (2) est compris entre 0,2 et 0,8.

11. Machine-outil ou machine de mesure **caractérisée en ce qu'**elle comporte un dispositif de compensation selon l'une des revendications précédentes.

[Fig. 1]

[Fig. 2]

[Fig. 3]

[Fig. 4]

[Fig. 5]

[Fig. 6]

[Fig. 7]

[Fig. 8]

Re = 0.83

[Fig. 9]

[Fig. 10]

[Fig. 11]

[Fig. 12]

[Fig. 13]

| Europäisches Patentamt European Patent Office Office européen des brevets | **RAPPORT DE RECHERCHE EUROPEENNE** | **Numéro de la demande** EP 24 19 3661 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2 584 921 A (RAWNSLEY DAVID W ET AL) 5 février 1952 (1952-02-05) | 1 | INV. F16F15/26 |
| A | * figure 1 * ----- | 2-11 | F16F15/28 |
| X | US 8 220 765 B2 (BAILEY DAVID W [US]; INTUITIVE SURGICAL OPERATIONS [US]) 17 juillet 2012 (2012-07-17) | 1-4,11 | |
| Y | * figures 1,4 * ----- | 7,8 | |
| Y | US 11 919 153 B2 (INTUITIVE SURGICAL OPERATIONS [US]) 5 mars 2024 (2024-03-05) * figure 2 * * colonne 19, ligne 13 - ligne 21 * ----- | 7,8 | |

**DOMAINES TECHNIQUES RECHERCHES (IPC)**

F16F

Le présent rapport a été établi pour toutes les revendications

| Lieu de la recherche | Date d'achèvement de la recherche | Examinateur |
|---|---|---|
| La Haye | 9 janvier 2025 | Beaumont, Arnaud |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 19 3661

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-01-2025

| Document brevet cité au rapport de recherche | | Date de publication | Membre(s) de la famille de brevet(s) | | Date de publication |
|---|---|---|---|---|---|
| US 2584921 | A | 05-02-1952 | AUCUN | | |
| US 8220765 | B2 | 17-07-2012 | AUCUN | | |
| US 11919153 | B2 | 05-03-2024 | US | 2022118633 A1 | 21-04-2022 |
| | | | US | 2024157585 A1 | 16-05-2024 |

Pour tout renseignement concernant cette annexe : voir Journal Officiel de l'Office européen des brevets, No.12/82

EPO FORM P0460

**RÉFÉRENCES CITÉES DANS LA DESCRIPTION**

**Documents brevets cités dans la description**

- US 4768762 A
- US 4500251 A
- US 20100294173 A
- JP 2000301405 B